(19) Europäisches Patentamt
European Patent Office
Office européen des brevets

(11) **EP 4 349 542 A2**

(12) **EUROPEAN PATENT APPLICATION**

(43) Date of publication:
**10.04.2024 Bulletin 2024/15**

(21) Application number: **23194462.0**

(22) Date of filing: **31.08.2023**

(51) International Patent Classification (IPC):
**B25J 9/16** (2006.01)    **B65G 57/00** (2006.01)
**B65G 61/00** (2006.01)

(52) Cooperative Patent Classification (CPC):
**B25J 9/1679; B65G 57/00; B65G 61/00;**
B25J 9/1669

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.09.2022   CN 202211121966**

(71) Applicant: **Robert Bosch GmbH**
**70442 Stuttgart (DE)**

(72) Inventors:
• **DING, Kai**
**Shanghai, 200335 (CN)**
• **YANG, Lisha**
**Shanghai, 200335 (CN)**
• **DING, Wan**
**Shanghai, 200335 (CN)**
• **XIONG, Heng**
**Shanghai, 200335 (CN)**

(74) Representative: **Isarpatent**
**Patent- und Rechtsanwälte Barth
Charles Hassa Peckmann & Partner mbB
Postfach 44 01 51
80750 München (DE)**

(54) **METHOD, APPARATUS, AND COMPUTER-READABLE STORAGE MEDIUM FOR DETERMINING PLACEMENT SCHEME OF OBJECTS**

(57)    The present disclosure provides a method, apparatus, and computer-readable storage medium for determining placement schemes for objects. The method may include the following steps: determining a set of candidate placement schemes associated with a current object to be placed in a container, wherein each candidate placement scheme comprises a corresponding candidate position for placing the current object and a corresponding placement posture of the current object at that candidate position; based on information of the candidate positions in each candidate placement scheme and object density information associated with each candidate placement scheme, selecting a final placement scheme for the current object in the container from the set of candidate placement schemes, wherein the object density information associated with each candidate placement scheme is configured to represent the degree of closeness of object placements in the container after placing the current object according to that candidate placement scheme.

**200**

FIG. 2

EP 4 349 542 A2

**Description**

**Technical Field**

The present disclosure relates to the field of robot technology, and more particularly, to methods, apparatus, and computer-readable storage media for determining the placement scheme of objects.

**Prior Art**

In recent years, with the continuous advancement in robot technology, the application of robots (e.g., robotic arms) in areas such as palletizing (e.g., placing boxes) and container loading has rapidly developed. This has significantly reduced labor costs and improved operational efficiency. In palletizing or packing scenarios, it is desirable to place as many objects (e.g., boxes) as possible in a reasonable and efficient manner, which involves determining how to place each object. Existing palletizing techniques are mainly applicable to offline scenarios, where the dimensions of the objects to be placed are known. However, there is still room for improvement in planning placement schemes and spatial utilization for such scenarios. The difficulty in planning placements further increases when information about the objects to be placed cannot be obtained in advance. Therefore, there is a need for an optimized planning scheme for object placement.

**Summary of the Invention**

Considering the aforementioned requirements, embodiments of the present disclosure provide a method, apparatus, and computer-readable storage medium for determining the placement scheme of objects.

On the one hand, the embodiments of the present disclosure provide a method for determining the placement scheme of objects, comprising: identify a set of candidate placement schemes associated with a current object to be placed in a container, wherein each candidate placement scheme comprises corresponding candidate positions for placing the current object and corresponding placement postures for the current object at the candidate position; and selecting, based on information regarding the candidate positions in each candidate placement scheme and object density information associated with each candidate placement scheme, a final placement scheme for the current object in the container from the set of the candidate placement schemes, wherein the object density information associated with each candidate placement scheme is configured to represent the closeness of object placements in the container after placing the current object according to the candidate placement scheme.

On the other hand, embodiments of the present disclosure provide an apparatus for determining the placement scheme of objects, comprising: a determination unit configured to: identify a set of candidate placement schemes associated with a current object to be placed in a container, wherein each candidate placement scheme comprises corresponding candidate positions for placing the current object and corresponding placement postures for the current object at the candidate position; and a selection unit configured to: select a final placement scheme from the set of candidate placement schemes for placing the current object into the container, based on information about the candidate positions in each candidate placement scheme and object density information associated with each candidate placement scheme, wherein the object density information associated with each candidate placement scheme is configured to represent the density of object placements in the container after placing the current object according to the candidate placement scheme.

On the other hand, embodiments of the present disclosure provide an apparatus for determining the placement scheme of objects, comprising: at least one processor; a memory in communication with the at least one processor, wherein executable code is stored thereon, and the executable code, when executed by the at least one processor, causes the at least one processor to perform the method.

On the other hand, embodiments of the present disclosure provide a computer-readable storage medium storing executable code that, when executed, causes a computer to perform the above-mentioned method.

**Description of Drawings**

A more detailed description of exemplary embodiments of the present disclosure is provided in conjunction with the drawings, in which the purposes, features, and advantages of the exemplary embodiments of the present disclosure and others will become apparent. Wherein, in the various drawings, the same reference numerals generally represent the same elements.

FIG. 1 illustrates a schematic diagram of an exemplary scenario in which the embodiments of the present disclosure can be applied.

FIG. 2 is a schematic flowchart illustrating a method for determining the placement of an object according to some embodiments.

FIG. 3A illustrates a schematic diagram of an example where the three vertices of an object are projected in the container's coordinate system.

FIG. 3B illustrates a schematic diagram of another example of the projected points and corresponding candidate positions.

FIG. 4 is a schematic flowchart illustrating a process for determining the placement of an object according to some embodiments.

FIG. 5A shows a schematic diagram of the Pareto front according to some embodiments.

FIG. 5B illustrates an example of an ideal point.

FIG. 6 is a schematic block diagram of a device for object placement according to some embodiments.

FIG. 7 is a schematic block diagram of a device for object placement according to some embodiments.

## Detailed Description

The subject matter described herein will now be discussed with reference to various embodiments. It should be understood that discussions about these embodiments are provided to aid those skilled in the art in better understanding and implementing the subject matter described herein. They do not limit the scope, applicability, or examples outlined in the claims. Changes can be made to the function and arrangement of the elements discussed without departing from the scope of protection of the claims. Various processes or components may be omitted, substituted, or added to the embodiments as needed.

As used herein, the term "comprising" and its variations are open terms and may mean "including but not limited to." The term "based on" may indicate "at least partially based on". The terms "an embodiment," "one embodiment," "some embodiments," etc., may mean "at least one embodiment". The terms "first," "second," etc., may refer to different or the same objects.

With the rapid development of robot technology, applications in tasks such as packing or palletizing have become increasingly common. Packing tasks typically include offline and online scenarios. In the offline scenario, information about objects (e.g., boxes, containers, etc.) is known in advance, allowing for a predetermined and uniform packing strategy. Conversely, in the online scenario, information about the objects to be placed is not available beforehand, and decisions on how to place each object are made in real-time as they arrive, such as a first-come-first-serve approach. Objects of various sizes are typically placed on a conveyor belt, and the difficulty of rational object placement increases due to the limited view provided by a depth camera that can only detect objects directly beneath it. Regardless of the scenario, there is a need for further optimizing the planning of object placement to improve space utilization and efficiency.

In light of this, the embodiments of the present disclosure provide a technical solution for determining placement schemes of objects. The embodiments of the present disclosure can be applied in offline scenarios as well as online scenarios. Moreover, the embodiments of the present disclosure are particularly suitable for online scenarios, effectively improving the spatial utilization of containers in such scenarios. The technical solutions of the present disclosure will be described below in connection with specific embodiments.

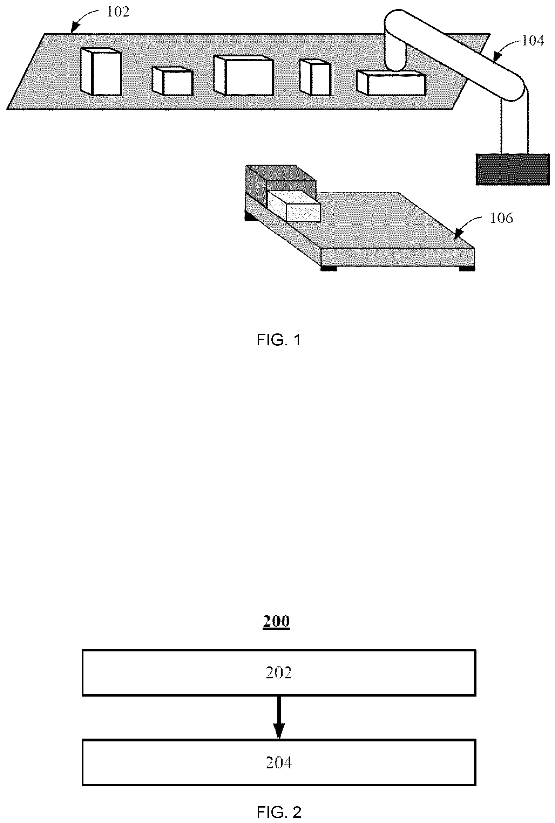

Firstly, for better understanding, FIG. 1 illustrates a schematic diagram of an exemplary scenario in which the embodiments of the present disclosure can be applied.

In the exemplary scenario shown in FIG. 1, various boxes arrive with a conveyor belt 102. A robot 104 can utilize its robotic arm to grasp the arriving boxes and place them on a pallet 106. If the information about each box is not known in advance and the decision on how to place the box on the pallet 106 is made upon its arrival, then the exemplary scenario in FIG. 1 can be categorized as an online packing scenario. If the information about each box is known beforehand, then the exemplary scenario in FIG. 1 can be categorized as an offline packing scenario.

It should be understood that FIG. 1 is for illustrative purposes only and does not limit the scenarios where the embodiments of the present disclosure can be applied. For example, in another application scenario, the robot may need to randomly pick objects (e.g., boxes) from a picking container containing various objects and then place them in another container following certain rules.

Regardless of the application scenario, the embodiments of the present disclosure can be applied to reasonably plan the placement schemes of various objects, effectively improving the spatial utilization of object placement, and so on.

FIG. 2 is a schematic flowchart illustrating a method for determining the placement of an object according to some embodiments. For example, the method of FIG. 2 can be executed by a control device of a robot (such as the robot 104 of FIG. 1).

In step 202, a set of candidate placement schemes associated with the current object to be placed in the container can be determined.

Each candidate placement scheme may include respective candidate positions for placing the current object and corresponding placement postures of the current object at those candidate positions.

In step 204, a final placement scheme for the current object in the container can be selected from the set of candidate placement schemes based on the information of the candidate positions in each candidate placement scheme and object density information associated with each candidate placement scheme.

The object density information associated with each candidate placement scheme is used to indicate the density of object placement in the container after placing the current object according to the candidate placement scheme.

In summary, in the embodiments of the present disclosure, a set of candidate placement schemes is first determined for the current object, such as candidate positions and their respective placement postures. Then, by considering factors such as candidate position information and the density of object placement associated with each candidate placement scheme, a final placement scheme is selected from the set of candidate placement schemes. As a result of considering candidate positions and object placement density when selecting the final placement scheme, the selected placement scheme effectively enhances the space utilization of the container.

In some embodiments, the placement posture may represent a posture that the object is in at a certain location. For example, the placement postures of the object may include horizontal placement (e.g., with the longer side parallel to the horizontal plane) and vertical placement (e.g., with the shorter side parallel to the horizontal plane), among others. In this case, the placement postures can be represented by rotation types. For example, when a robot is grasping an object, there may be two rotation types, corresponding to two placement postures after the object is placed, such as the horizontal placement posture and the vertical placement posture. In a simple embodiment, the rotation types can be represented by 0 and 1, respectively, indicating the corresponding placement postures.

The individual candidate positions in a set of candidate placement schemes can be determined in various applicable ways. For example, the Extreme Point (EP) algorithm can be employed to obtain these candidate positions.

For example, each candidate position in a set of candidate placement schemes can be one of the points derived from projecting three vertices of the object to be placed in the container. The following will describe in detail how the projection of the three vertices is performed.

The three vertices can include a first vertex, a second vertex, and a third vertex. The first vertex may be located on the top surface, the back surface, and the left side surface of the object to be placed. The second vertex may be located on the bottom surface, the front surface, and the left side surface of the object to be placed. The third vertex may be located on the bottom surface, the back surface, and the right side surface of the object to be placed.

For clarity, the various sides of the object can be indicated relative to the container's coordinate system. The origin o of the container's coordinate system can be one of the vertices of the container's bottom surface (e.g., one of the four vertices of the bottom surface). The origin o of the coordinate system can serve as the starting point for placing objects in the container. For example, the origin o can be a vertex on the left side of the container and on the bottom and back surfaces (e.g., from the perspective of a robot), or it can be understood as the deepest, leftmost, and bottommost point of the container. In the container's coordinate system, the bottom surface of the container can be the xy plane, and the upward direction perpendicular to the container's bottom surface can correspond to the z-axis. For example, the length, width, and height directions of the container can correspond to the x-axis, y-axis, and z-axis of the coordinate system, respectively. Therefore, the container may have a first sidewall as the xz plane and a second sidewall as the yz plane. It should also be understood that the sidewalls mentioned herein can be physically present or virtually constructed based on the dimensions of the container's bottom surface. For example, if the container is a pallet, it may not have physically existing sidewalls, so the sidewalls (e.g., the aforementioned first and second sidewalls) can be virtually constructed based on the bottom surface and related dimension information. On the other hand, if the container is a shipping container, it can have physically existing sidewalls (e.g., the aforementioned first and second sidewalls). Furthermore, it is understood that the positive and negative directions of the x, y, and z axes of the container's coordinate system can be defined according to practical situations or requirements. Typically, for ease of illustration, the container's coordinate system is set such that the container is in a positive direction of the x-axis, the y-axis, and the z-axis.

In this coordinate system, the top and bottom surfaces of the object to be placed can be parallel to the xy plane, the left and right sides can be parallel to the xz plane, and the front and back sides can be parallel to the yz plane. In the container's coordinate system, starting from the origin 'o,' the object placement can be done along the positive directions of the x, y, or z axes.

For each vertex, it can be projected onto a surface adjacent to and capable of receiving the projection of the vertex within the confined space of the container. For example, the first vertex can be projected onto the xoz plane (i.e., the upper first sidewall of the container) or onto a surface of another object capable of receiving the projection of the first vertex. For example, when the container's coordinate system is set to place objects along the positive direction of the x, y, or z-axis, the first vertex can be projected along the negative direction of the y-axis onto the xoz plane or onto a surface of another object capable of receiving the projection of the first vertex. For example, assuming that the placed object is adjacent to the first sidewall of the container, the first vertex can be projected along the negative direction of the y-axis onto the first sidewall. Again, for example, assuming that the left side surface of the placed object is immediately adjacent to the right side surface of the other object, and that the other object is taller than the placed object, then the first vertex may be projected onto the right side surface of the other object along the negative direction of the y axis. Again, for example, assuming that the left side surface of the placed object is immediately adjacent to the right side surface of the other object, and that the left side surface of the other object is immediately adjacent to the first side surface of the container, but that the other object is lower than the placed object, then the first vertex may be projected onto the first sidewall along the negative direction of the y axis. Moreover, the first vertex can also be projected onto the yoz plane (i.e., the upper second sidewall of the container) or onto a surface of another object capable of receiving the projection of the first vertex (e.g., projecting along the negative direction of the x-axis). The specific projection onto the second sidewall or another object's surface is similar to the examples mentioned above and will not be repeated here.

The second vertex can be projected onto the xoz plane (i.e., the first side) or onto a surface of another object capable of receiving the projection of the second vertex (e.g., along the negative direction of the y-axis). The second vertex can also be projected onto the xoy plane (i.e., the bottom surface of the container) or onto a surface of another object capable of receiving the projection of the second vertex (e.g., along the negative direction of the z-axis). The specific implementation of the projection of the second vertex is similar to the first vertex and will not be repeated here.

The third vertex can be projected onto the yoz plane (i.e., the second sidewall) or onto a surface of another object capable of receiving the projection of the third vertex (e.g., along the negative direction of the x-axis). Additionally, the third vertex can be projected onto the xoy plane (i.e., the bottom surface of the container) or onto a surface of another object capable of receiving the projection of the third vertex (e.g., along the negative direction of the z-axis). The specific implementation of the projection of the third vertex is similar to the first vertex and will not be repeated here.

It can be seen that each vertex can be projected along two directions onto the sidewalls of the container or surfaces of other objects, thereby generating corresponding points. The candidate positions can be some or all of the points obtained from the projection. Further explanations will be provided with specific examples.

For a better understanding, the following is a detailed explanation of how to project the three vertices of an object in the container, illustrated with a specific example.

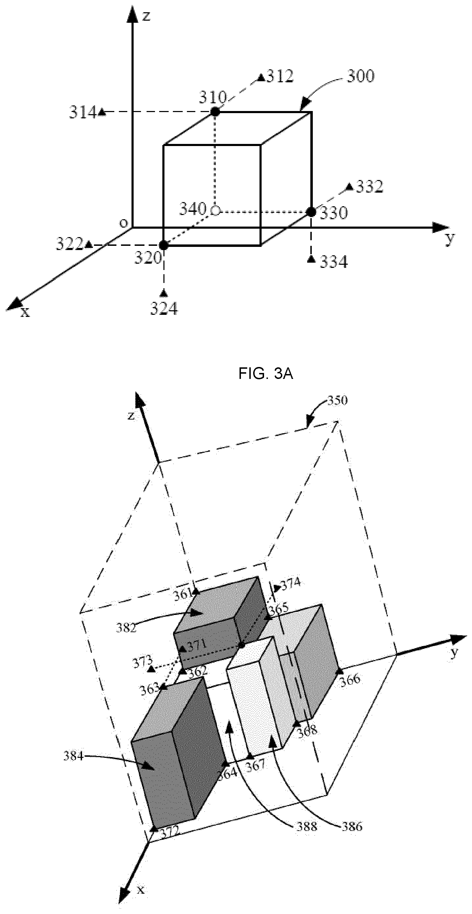

FIG. 3A illustrates a schematic diagram of an example where the three vertices of an object are projected in the container's coordinate system.

In the example shown in FIG. 3A, it is assumed that the object 300 has been placed within the container (not shown in FIG. 3A). As shown in Figure 3A, a three-dimensional coordinate system is established based on the container. The origin o of the coordinate system can be one of the four vertices of the container's base, such as the left-back-bottom corner of the container. The origin o can serve as the starting point for placing the object within the container. The xy plane may be the bottom surface of the container can be the xy plane, and the upward direction perpendicular to the container's bottom surface can correspond to the z-axis. The length direction of the container corresponds to the x-axis, while the width direction corresponds to the y-axis.

Based on the above description, three vertices of the object 300 are available for projection, namely the first vertex 310, the second vertex 320, and the third vertex 330. As mentioned earlier, the first vertex 310 can be projected onto the yoz-plane or xoz-plane itself, or it can be projected onto a surface parallel to the yoz-plane or xoz-plane of another object. In the example of FIG. 3A, it is assumed that the projection of the first vertex 310 results in points 312 and 314. Similarly, the second vertex 320 can be projected onto the xoy-plane or xoz-plane itself, or it can be projected onto a surface parallel to the xoy-plane or xoz-plane of another object. In the example of FIG. 3A, it is assumed that the projection of the second vertex 320 results in points 322 and 324. The third vertex 330 can be projected onto the xoy-plane or yoz-plane itself, or it can be projected onto a surface parallel to the xoy-plane or yoz-plane of another object. In the example of FIG. 3A, it is assumed that the projection of the third vertex 330 results in points 332 and 334.

Points 312, 314, 322, 324, 332, and 334 may represent potential positions for placing subsequent objects (i.e., objects to be placed after object 300). It should be understood that the positions for placing objects, mentioned in the embodiments described herein, can correspond to vertices on the left, back, and bottom sides of the object. For example, in the example of FIG. 3A, the position of object 300 within the container can be represented by the coordinates of vertex 340. In some embodiments, these points obtained through projection can also be referred to as extreme points.

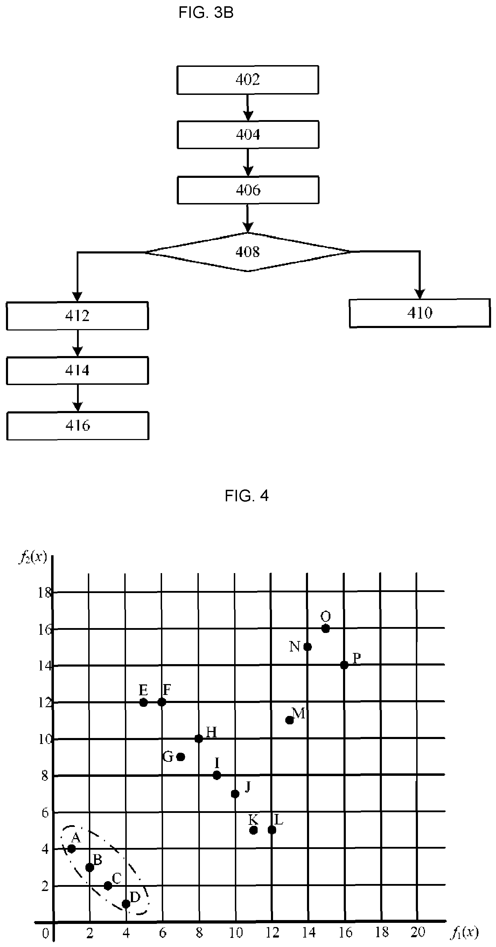

As shown in the example of FIG. 3A, it can be understood that some points obtained through projection may overlap. Additionally, in certain cases, not all points obtained by projecting the three vertices mentioned above can serve as candidate positions for object placement. Some points may lack sufficient space to accommodate the object, some points may lead to unstable placements (e.g., overhanging), or some points may result in collisions with neighboring objects, among other factors. This will be further described in conjunction with the example shown in FIG. 3B.

In embodiments of the present disclosure, each candidate position for the current object, i.e., each candidate placement scheme, may satisfy the following conditions: the candidate position has sufficient space to accommodate the current object, there is no collision between the current object and other objects at the candidate position, and the placement of the current object at the candidate position meets stability requirements.

In some embodiments, the actual candidate positions for the current object may be selected based on these conditions from the points obtained by projecting the three vertices of the previously placed objects.

To determine whether the candidate position has enough space to accommodate the current object, the dimensions of the current object and the remaining space at that candidate position can be considered.

To determine whether there are collisions between the current object and other objects at the candidate position, factors such as the dimensions of the current object, the dimensions of other objects near the candidate position, and the coordinates of the candidate position can be taken into account. For example, collisions present at candidate positions may involve the current object having its surface not parallel to the container coordinate system's corresponding plane after being placed at the candidate position, due to contact with other objects. For example, the current object's bottom surface contacts the top surface of another object, causing the current object to be inclined. This can be considered a collision between the current object and other objects at the candidate position.

Regarding whether the placement of the current object at the candidate position meets stability requirements, it can be determined by considering information such as the current position's center of gravity, the size of the current object, the coordinates of the candidate position, and the size of other objects near the candidate position. Various applicable methods can be used to make these determinations, and the present disclosure does not limit the approach.

In some embodiments, each candidate position can be projected as the object is continuously placed in the container. For example, after placing an object in the container, the three vertices of the object can be projected onto corresponding surfaces following the above-mentioned method, resulting in respective points. Based on the mentioned conditions, an appropriate point from the projected points can be selected as the candidate position for the next object. Therefore, the candidate positions can be continuously updated as objects are placed in the container. This updating process may involve adding new candidate positions and removing used or no longer suitable candidate positions, among other actions. In such embodiments, candidate positions can be stored in a list, and the candidate position list can be updated accordingly as objects are continuously placed in the container. Thus, the mentioned candidate positions for the current object can be selected from the candidate position list, meaning all candidate positions in the list can be considered as potential locations for the current object.

To better understand candidate positions, FIG. 3B illustrates a schematic diagram of another example of the projected points and corresponding candidate positions.

In the example depicted in FIG. 3B, it is assumed that some objects have already been placed in the container 350. Additionally, FIG. 3B shows the x-axis, y-axis, and z-axis of the coordinate system for container 350, wherein the x-axis, y-axis, and z-axis correspond to the length direction, width direction, and height direction of the container 350, respectively. Specifically, the bottom surface of the container 350 can act as the xy-plane, and the container 350 can have a first sidewall that serves as the xz-plane and a second sidewall that serves as the yz-plane. As mentioned earlier, it is understood that the sidewalls of the container 350 shown in FIG. 3B can be either physically present or virtually constructed. For example, if the container 350 is a shipping container or another container with physical walls, the sidewalls shown in FIG. 3B can be actual existing sidewalls. On the other hand, in some scenarios, the container 350 may lack physically present walls, such as when the container 350 is a pallet. In such cases, the sidewalls shown in FIG. 3B can be virtual sidewalls constructed based on the bottom surface of the container 350. The present disclosure does not limit this aspect.

In the example of FIG. 3B, the three vertices of each object can be projected following the method described in the example with FIG. 3A. For example, after placing an object, the three vertices are projected.

Assuming that in the example of FIG. 3B, the projection results in points 361, 362, 363, 364, 365, 366, 367, 368, 371, 372, 373 and 374. It can be observed that some vertices may yield overlapping points in two directions. Furthermore, not all the projected points may be suitable as candidate positions for the current object.

For example, consider the first vertex (located on the top, left-side, and back-side) of object 384. It is projected along the negative y-axis onto the first sidewall of container 350 (as the xz-plane sidewall) and along the negative x-axis onto the front side of object 382 (parallel to the yz-plane surface of object 382). The projection of the first vertex of the object 384 results in the points 363 and 371. However, the point 371 may cause the current object to be in a suspended state, i.e., unstable, and thus, the point 371 is unsuitable as a candidate position for the current object.

Regarding the second vertex (located on the bottom, front-side, and left-side) of the object 384, its projection along the negative y-axis and negative z-axis results in the same point, the point 372. In the example of FIG. 3B, it is assumed that the point 372 is very close to the sidewall of the container 350, and the space at the point 372 is insufficient to accommodate the current object. In this case, the point 372 is also unsuitable as a candidate position for the current object.

For the first vertex of the object 386 (located on the top, left-side, and back-side), as the object 386 is higher than its nearest object 388, the first vertex of the object 386 can be projected along the negative y-axis onto the first sidewall of the container 350 and along the negative x-axis onto the second sidewall of the container 350. The projection of the first vertex of the object 386 results in the points 373 and 374. However, as the points 373 and 374 cause the current object to be in a suspended state, i.e., unstable, the points 373 and 374 are also unsuitable as candidate positions for the current object.

In some cases, if the object 388's size is smaller than that of the current object, the point 362 may lead to the current object being unable to lie flat after placement, for instance, its bottom surface not being parallel to the xy-plane of the coordinate system but rather making contact with an edge of the top surface of the object 384. This situation is referred to as a collision between the current object and the object 384. In this case, the point 362 is unsuitable as a candidate position for the current object.

Therefore, in the example of FIG. 3B, it is assumed that the remaining points meet the aforementioned three conditions, the candidate positions for the current object can include the points 361,363,364,365,366,367,368.

Additionally, based on the example in FIG. 3B, it can be seen that each object's placement corresponds to a placement posture. For example, if the object 384's length aligns with the x-axis, the placement posture of the object 384 is considered horizontal. Again, for example, if the object 386's width aligns with the x-axis, the placement posture of the object 386 is considered vertical. As mentioned earlier, the placement posture of an object at a given position can be represented using a rotation type. Furthermore, it is evident that different placement postures also affect the space utilization of the container.

As previously mentioned, after determining a set of candidate placement schemes, the final placement scheme can be selected based on the information of the candidate positions and object density information.

In some embodiments, the final placement scheme can be selected from a set of candidate placement schemes based on the first heuristic objective and the second heuristic objective.

The first heuristic objective may be set to: identify the candidate placement scheme with the minimum height of the candidate positions in the set of candidate placement schemes, or if the candidate positions have the same height, to identify the candidate placement scheme closest to the starting point for object placement in the container. Specifically, based on the first heuristic objective, the placement of objects along the horizontal direction of the container can be prioritized, starting from the starting point. For example, when the container's bottom is not fully covered, the objective would be to maximize the coverage of the container's bottom.

The second heuristic objective may be set to: identify the candidate placement scheme with the highest object placement density in the set of candidate placement schemes. Through the second heuristic objective, the objective is to increase the density of the objects. Thus, the first and second heuristic objectives can be approached from different perspectives to optimize the space utilization of the container during object placement.

In the embodiments of the present disclosure, the process of determining the final placement scheme for current objects can be transformed into a multi-objective optimization problem, which can be solved using heuristic algorithms. Specifically, in this process, two heuristic algorithms mentioned herein, which are the first and second heuristic objectives, can be combined to consider different aspects in determining the placement scheme for current objects. This will effectively enhance the space utilization of the container. Compared to considering only one heuristic algorithm (i.e., one heuristic objective), the combination of two heuristic algorithms (the first and second heuristic objectives mentioned above) can lead to more reasonable object placement schemes, significantly improving the space utilization of the container, especially in scenarios such as online packing.

In some examples, the information of the candidate positions in each candidate placement scheme can include the three-dimensional coordinates of the candidate positions in the container's coordinate system. As mentioned earlier, the origin of the container's coordinate system can be a vertex on the container's bottom and can serve as the starting point for object placement. The container's bottom can be considered the xy plane, and the upward direction perpendicular to the container's bottom can correspond to the z-axis. The length and width directions of the container can correspond to the x and y-axes, respectively. For example, in the example shown in FIG. 3B, the origin of the container's coordinate system 350 can be a vertex on the left side, back, and bottom surface of the container 350. Under the coordinate system of the container 350, each candidate position can have its corresponding three-dimensional coordinates.

Accordingly, the first heuristic objective can be set to: identify the candidate placement scheme with the minimum z-coordinate value of the candidate positions in the set of candidate placement schemes; if there are at least two candidate placement schemes with the same and minimum z-coordinate values, then identify the candidate placement scheme with the minimum y-coordinate value of the candidate positions; if there are at least two candidate placement schemes with the same and minimum z and y-coordinate values, then identify the candidate placement scheme with the minimum x-coordinate value of the candidate positions.

Specifically, the candidate placement scheme with the smallest z-coordinate for candidate positions can be given the highest priority. If the candidate positions of at least two candidate placement schemes have the same and smallest z-coordinate, then the candidate placement scheme with the smallest y-coordinate would have the highest priority. If the candidate positions of at least two candidate placement schemes have the same and smallest z and y-coordinates, then the candidate placement scheme of the candidate position with the smallest x-coordinate would have the highest priority.

In this manner, the various candidate placement schemes can be sorted based on priority, from the highest to the lowest. For example, the candidate placement scheme of the candidate position with the smallest z-coordinate can be placed at the front, indicated by sequence number 1. Through the first heuristic objective, the placement of objects in the container can be rationalized, which contributes to an increased space utilization.

In some embodiments, the object density information associated with each candidate placement scheme may include the visible surface area corresponding to the candidate placement scheme. The visible surface area corresponding to each candidate placement scheme can be used to represent the total visible surface area of the objects in the container after placing them according to that candidate placement scheme. The visible surface area refers to the area of the surface that can be seen. Specifically, the visible surface area corresponding to each candidate placement scheme can be used to represent the total visible surface area of all objects (including the current object) in the container after placing them according to that candidate placement scheme.

After the objects are placed in the container, some surfaces of the objects may not be visible due to contact between objects or between objects and the container's walls (e.g., adjacent or stacked placement). Therefore, from a top-down perspective (e.g., through the camera associated with the robot), some surfaces of the objects may not be visible. In this context, the total area of the visible surfaces of all objects can be determined, which is referred to as the visible surface area herein. It can be seen that the visible surface area can effectively respond to the density of the objects. It can be seen that the smaller the visible surface area, the closer the objects are placed together.

Correspondingly, the second heuristic objective can be set to: identify the candidate placement scheme with the smallest visible surface area in the set of candidate placement schemes. Thus, through the second heuristic objective, the objects can be placed as tightly as possible, thereby improving space utilization.

In some embodiments, the visible surface area corresponding to each candidate placement scheme can be calculated as follows: the total surface area of all objects placed in the container after placing the current object according to the candidate placement scheme is subtracted by two items: the total surface area of contacts between individual objects and the total surface area of contacts between individual objects and the container.

For example, the visible surface area can be represented by the following equation:

$$S_{visible\_area} = \sum_{i=1}^{n} S_i - S_{contact\_items} - S_{contact\_container}$$

wherein, assuming that n objects have been placed in the container, $S_i$ can represent the total surface area of the object i. $S_{contact\_items}$ can represent the total surface area of contact between individual objects. $S_{contact\_container}$ can represent the total surface area of contact between individual objects and the container.

It is understood that when calculating the visible surface area for each candidate placement scheme, the set of "n" objects includes the current object to be placed. Additionally, when determining the contact surface area between objects, all surfaces of each object (e.g., front, back, left, right, top, and bottom) that are in contact with each other are considered. Likewise, when determining the total contact surface area between objects and the container, all surfaces of each object (e.g., front, back, left, right, top, and bottom) in contact with the container are taken into account.

The information required for calculating the visible surface area can be obtained through various suitable means, such as capturing images of the container using cameras (e.g., 3D cameras or depth cameras) and subsequently analyzing the images to extract the necessary information.

Based on the above description, the method proceeds by first identifying whether there exists a target candidate placement scheme in the set of candidate placement schemes that simultaneously satisfy the first heuristic objective and the second heuristic objective. If a target candidate placement scheme exists, the target candidate placement scheme can be used as the final placement scheme.

if there is no target candidate placement scheme, at least two candidate placement schemes may be identified as a set of available placement schemes within the set of candidate placement scheme, and selecting the final placement scheme from the set of available placement schemes.

As described above, the selection of the final placement scheme based on the first heuristic objective and the second heuristic objective can be understood as a multi-objective optimization problem. For multi-objective optimization problems, there may be an optimal solution, or there may not be one. In other words, there may exist a target candidate placement scheme satisfying the aforementioned objectives, or such target candidate placement scheme may not be found. Therefore, the final placement scheme can be determined based on different situations.

Specifically, a multi-objective function can be constructed using multi-objective optimization algorithms. The multi-objective function can include multiple objective functions, for example, it can include the first objective function corresponding to the first heuristic objective and the second objective function corresponding to the second heuristic objective.

For example, the independent variables of the first and second objective functions can be candidate placement schemes, and their respective function values change as the candidate placement schemes vary. In multi-objective optimization problems, the independent variables are often referred to as decision variables. In the embodiments herein, the decision variables may include candidate positions and placement postures.

Correspondingly, the function value of the first objective function can represent the ordering of candidate placement schemes according to the first heuristic objective, and the function value of the second objective function can represent the ordering of candidate placement schemes according to the second heuristic objective or directly represent the density of object placement. For example, the function value of the first objective function can be the ordering of candidate placement schemes based on the coordinates of the candidate positions as mentioned earlier. The function value of the second objective function can be the ordering of candidate placement schemes based on the visible surface area or the actual value of the visible surface area of the candidate placement schemes. The present disclosure does not limit this aspect.

The aforementioned multi-objective functions can be solved based on any applicable multi-objective optimization model. For example, the multi-objective function can be solved based on the Pareto model.

In some embodiments, it is possible to determine whether there exist Pareto optimal solutions based on the multi-objective functions. The Pareto optimal solutions can correspond to the target placement schemes.

However, in many cases, it may not be possible to identify Pareto optimal solutions. In such a situation, the Pareto front can be determined, which includes a set of weakly Pareto optimal solutions. Here, the placement scheme corresponding to each weakly Pareto optimal solution may be considered as the available placement scheme as mentioned above. Therefore, a set of weakly Pareto optimal solutions can correspond to a set of available placement schemes as mentioned above. Specifically, each weakly Pareto optimal solution corresponds to one available placement scheme, and each available placement scheme corresponds to a function value of the first objective function and a function value of the second objective function. Accordingly, each weakly Pareto optimal solution corresponds to a function value of the first objective function and a function value of the second objective function.

In some embodiments, to select the final placement scheme from a set of available placement schemes, an ideal point can be determined. For example, the ideal point can include the minimum function value of the first objective function and the minimum function value of the second objective function. The ideal point can also be referred to as the Utopian Point.

Then, the proximity between each weakly Pareto optimal solution and the ideal point can be determined. The target weakly Pareto optimal solution of in the set of the weakly Pareto optimal solutions closest to the ideal point can be identified. Consequently, the available placement scheme corresponding to the target weakly Pareto optimal solution can be selected as the final placement scheme. Thus, by employing this approach, a relatively preferred group of available placement schemes can be initially determined, and then the best placement scheme can be reasonably selected as the final scheme based on its distance to the ideal points.

The proximity of a set of weakly Pareto optimal solutions to their respective ideal points can be calculated using various applicable algorithms. For example, the Euclidean Distance algorithm can be utilized to determine the Euclidean distance between each weakly Pareto optimal solution and its corresponding ideal point. This enables the efficient determination of the proximity between the set of weakly Pareto optimal solutions and the ideal points. The weakly Pareto optimal solution with the minimum Euclidean distance to the ideal points can be considered as the target weakly Pareto optimal solution.

Additionally, apart from the Euclidean Distance algorithm, other algorithms such as the Manhattan distance, Chebyshev distance, etc., can also be used to compute the proximity between the weakly Pareto optimal solutions and the ideal points, and this disclosure does not limit the scope to any specific algorithm.

For better comprehension, the following detailed examples will be presented to describe the process of the technical solution disclosed herein. It should be noted that these examples do not impose any restrictions on the scope of the present disclosure.

FIG. 4 is a schematic flowchart illustrating a process for determining the placement of an object according to some embodiments.

In step 402, a set of the candidate positions associated with the current object can be determined.

For example, a set of the candidate positions can be determined as described in the examples combining FIGS. 3A and 3B.

In step 404, a set of candidate placement schemes can be formed based on the set of the candidate positions and placement postures. Each candidate placement scheme may include a corresponding candidate position and the corresponding placement posture. For example, assuming there are two placement postures (e.g., horizontal and vertical), a candidate position paired with a placement posture can form a candidate placement scheme. Thus, for the same candidate position, two candidate placement schemes can be formed.

In step 406, the function values of the first objective function and the second objective function in the multi-objective function can be calculated for the set of candidate placement schemes.

In Multi-Objective Optimization (MOO) issues, the multi-objective function is typically represented as follows:

$$\text{Minimize } F(x) = [f_1(x), f_2(x), \ldots, f_k(x)]^T$$

$$\text{subject to } g_j(x) \le 0, j = 1, 2, \ldots, m$$

9

$$h(x) = 0, = 1, 2, \dots, e$$

where $k$ represents the number of objective functions, $m$ represents the number of inequality constraints, and e represents the number of equality constraints, $x \in E^n$ represents the vector of decision variables, where $n$ represents the number of independent decision variables. $F(x) \in E^k$ represents the vector of objective functions: $f_i(x): E^n \rightarrow E^1$.

In the embodiments of the present disclosure, there may exist two objective functions, for example, the first objective function corresponding to the aforementioned first heuristic objective and the second objective function corresponding to the aforementioned second heuristic objective. Therefore, the multi-objective function mentioned in the embodiments of the present disclosure can be represented as:

$$\text{Minimize } F(x) = [f_1(x), f_2(x)]^T$$

where $f_1(x)$ may represent the first objective function and $f_2(x)$ may represent the second objective function. The above equation indicates that $f_1(x)$ and $f_2(x)$ are simultaneously minimized.

The decision variable x can represent the candidate placement schemes. For example, it can be expressed using the three-dimensional coordinates of the candidate positions and the placement posture (e.g., represented by a rotation type).

Considering the previous embodiments, the function value of $f_1(x)$ can be the order of candidate placement schemes sorted according to the aforementioned three-dimensional coordinates, and the function value of $f_2(x)$ can be the order or value of visual surface area of candidate placement schemes after sorting according to the visible surface area.

In step 408, based on the function values of the first and second objective functions respectively, it can be determined whether Pareto optimal solutions exist.

For multi-objective optimization problems, the Pareto model can be used for solutions. The Pareto optimal solution is usually defined as follows:

If there are no other points $x \in X$ for a certain point $x^* \in X$ such that $F(x) \leq F(x^*)$ and at least one objective function $f_i(x) < f_i(x^*)$, then the point $x^*$ is the Pareto optimal solution.

Thus, it can be determined whether Pareto optimal solutions exist based on the function values of the first and second objective functions. The Pareto optimal solutions can correspond to the target candidate placement schemes. If there is a Pareto optimum solution, in step 410, the target candidate placement scheme corresponding to the Pareto optimal solutions can be selected as the final placement scheme for the current object.

If there is not a Pareto optimal solution, then in step 412, the Pareto front can be determined. The Pareto front may comprise a set of weakly Pareto optimal solutions.

For multi-objective optimization problems, there may not be a unique optimal solution. Therefore, weakly Pareto optimal solutions can be determined. Weakly Pareto optimal solutions are typically defined as follows:

If there is no other point $x \in X$ for a certain point $x^* \in X$, such that $F(x) < F(x^*)$, then the point $x^*$ is the weakly Pareto optimal solution.

A set of weakly Pareto optimal solutions can form the Pareto front. To facilitate understanding, the following specific example is provided to illustrate the Pareto front.

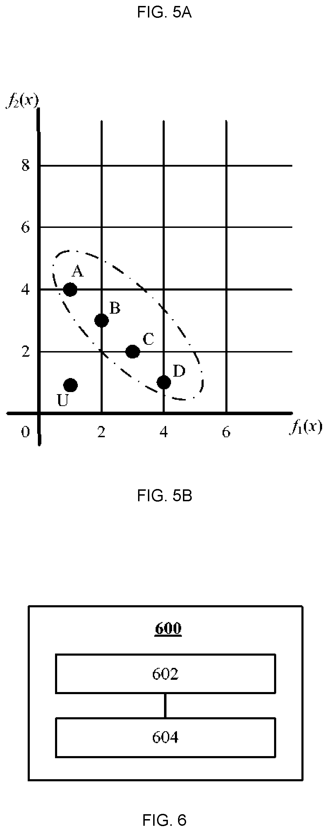

FIG. 5A shows a schematic diagram of the Pareto front according to some embodiments.

In the example of FIG. 5A, assuming a Pareto model, 16 solutions of the multi-objective function F(x) are obtained, corresponding to 16 candidate placement schemes. In the example of FIG. 5A, the 16 solutions are represented as points 16 points A-P. Each solution includes a function value of $f_1(x)$ and a function value of $f_2(x)$ under a respective candidate placement scheme. In Figure 5A, the horizontal axis represents the function values of $f_1(x)$, and the vertical axis represents the function values of $f_2(x)$.

Based on the definition of weakly Pareto optimal solutions mentioned above, it can be observed that in the example of FIG. 5A, points A, B, C, and D form a set of weakly Pareto optimal solutions, thereby forming the Pareto front, indicated by the dashed ellipse in FIG. 5A. Points A, B, C, and D correspond to a set of available placement schemes among the candidate placement schemes.

Returning to FIG. 4, in step 414, the Euclidean distance between each weakly Pareto optimal solution and the ideal point is determined.

The ideal point (also referred to as the Utopian Point) is usually defined as follows:

$$F^\circ = \underset{x}{\text{minimum}}\{F_i(x) | x \in X\}$$

If for point $F^\circ \in F^k$, where $i=1,2,\dots,k$, , then point $F^\circ$ is the ideal point.

It can be seen that at the ideal point, each objective function reaches a minimum value.

For better understanding, in conjunction with the example in FIG. 5A, FIG. 5B illustrates an example of the ideal point. In FIG. 5B, it is assumed that the ideal point is denoted as point U. the Euclidean distance between point U and points A, B, C, and D on the Pareto front is calculated separately.

The Euclidean distance can be calculated using the following equation:

$$N(\mathrm{x}) = \left| \mathrm{F(x)} - \mathrm{F}^\circ \right| = \{\textstyle\sum_{i=1}^{k}[f_i(x) - f_i^\circ]^2\}^{\frac{1}{2}}$$

where $N(x)$ may represent the Euclidean distance, $k$ may represent the number of objective functions, $f_i^\circ$ and may represent the minimum value of the $i^{th}$ objective function.

In step 416, the target weakly Pareto optimal solution with the minimum Euclidean distance to the ideal point is determined. The available placement scheme corresponding to the target weakly Pareto optimal solution can be selected as the final placement scheme of the current object.

As demonstrated by the exemplary embodiments disclosed in the present disclosure, the final placement scheme determined for placing the current object effectively improves the spatial utilization of the container. This has been confirmed in experiments. For example, when the length, width, and height of the container are respectively 60 cm, 40 cm, and 20 cm, the cube bin is placed in the container with the robot. A total of 40 boxes need to be placed in the container. 50 tests were conducted considering only candidate positions information or visible surface area and 50 tests considering both candidate positions information and visible surface area. From the experimental results, it is evident that considering both candidate positions information and visible surface area results in significantly higher spatial utilization than considering only a single factor.

FIG. 6 is a schematic block diagram of a device for object placement according to some embodiments.

As shown in FIG. 6, the apparatus 600 may include a determination unit 602 and a selection unit 604.

The determination unit 602 can determine a set of candidate placement schemes associated with the current object to be placed in the container. Each candidate placement scheme may include respective candidate positions for placing the current object and corresponding placement postures of the current object at those candidate positions.

The selection unit 604 can select a final placement scheme for the current object in the container from the set of candidate placement schemes based on the information of the candidate positions in each candidate placement scheme and object density information associated with each candidate placement scheme. The object density information associated with each candidate placement scheme is used to indicate the density of object placement in the container after placing the current object according to the candidate placement scheme.

The individual units of apparatus 600 can execute specific processes described in the exemplary embodiments of the method. Therefore, for brevity, the specific operations and functionalities of the individual units of apparatus 600 will not be repeated here.

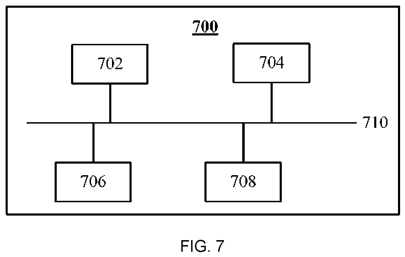

FIG. 7 is a schematic block diagram of a device for object placement according to some embodiments.

As shown in FIG. 7, the apparatus 700 may include a processor 702, a memory 704, an input interface 706, and an output interface 708, which are coupled together via a bus 710. However, it should be understood that FIG. 7 is for illustrative purposes only and does not limit the scope of the present disclosure. For example, in different application scenarios, the apparatus 700 may include more or fewer modules, and the present disclosure is not limited to any specific configuration.

The memory 704 can be used to store various data (such as information about candidate positions, object density information, placement postures, Pareto optimal solutions, Pareto fronts, Euclidean distances, etc.) related to the functionality or operation of the apparatus 700, executable instructions, or executable code, among others. For example, the memory 904 may include, but is not limited to, Random Access Memory (RAM), Read-Only Memory (ROM), Flash memory, Programmable Read-Only Memory (PROM), erasable Programmable Read-Only Memory (Erasable PROM, EPROM), registers, hard disks, and the like.

The processor 702 can be used to execute or implement various functionalities or operations of the apparatus 700, such as the various operations described in this disclosure for determining object placement schemes. For example, the processor 702 may execute executable code or instructions stored in the memory 704 to implement various processes described in various embodiments of the present disclosure. The processor 702 may include various applicable processors, such as a general-purpose processor (e.g., Central Processing Unit, CPU), specialized processors (e.g., digital signal processors, graphics processing units, Application-Specific Integrated Circuits, etc.).

The input interface 706 can receive various forms of data, such as data related to the processes described in this disclosure, e.g., images of the container obtained from a 3D camera, etc. In some embodiments, the input interface 706 may also facilitate communication based on various wired or wireless communication standards.

The output interface 708 can output various forms of data, messages, or information. For example, the output interface 708 may output the final placement scheme described in this disclosure, so that a robot can place the current object in the container based on the final placement scheme. In some embodiments, the output interface 708 may facilitate communication based on various applicable wired or wireless communication standards.

The present disclosure also provides embodiments of a computer-readable storage medium. The computer-readable storage medium may store executable code that, when executed by a computer, enables the computer to implement the specific processes described above regarding the decoding apparatus.

For example, the computer-readable storage medium may include, but is not limited to, RAM, ROM, Electrically-Erasable Programmable Read-Only Memory, EEPROM, Static Random Access Memory, SRAM, hard disk, flash memory, and the like.

The specific embodiments of the present disclosure have been described above. Other embodiments are within the scope of the appended claims. In some cases, actions or steps described in the claims can be performed in a different order than that of the embodiments and still achieve the desired results. Additionally, the processes depicted in the drawings do not necessarily require specific or continuous sequences to achieve the desired results. In some embodiments, multitasking and parallel processing are also possible or advantageous.

Not all steps and units depicted in the flowcharts and system diagrams are mandatory; certain steps or units may be omitted based on actual needs. The apparatus structures described in the aforementioned embodiments can be physical or logical structures. That is, some units may be implemented by the same physical entity, while others may be implemented by multiple physical entities or may be jointly implemented by certain components in multiple separate devices.

Throughout this specification, the term "exemplary" means "serving as an example, instance, or illustration" and does not imply "preferred" or "advantageous" over other embodiments. Specific embodiments include specific details to facilitate understanding of the described technology. However, these technologies can be implemented without these specific details. In some instances, to avoid difficulties in understanding the concepts of the described embodiments, known structures and devices are shown in block diagram form.

The above, in conjunction with the drawings, details various optional embodiments of the present disclosure. However, the embodiments of the present disclosure are not limited to the specific details of the embodiments mentioned above. Within the technical scope of the embodiments of the present disclosure, various modifications to the technical solutions of the embodiments of the present disclosure are possible, and these modifications fall within the protection scope of the embodiments of the present disclosure.

The above description of the present disclosure is provided to enable any person skilled in the art to implement or use the present disclosure. Various modifications to the present disclosure will be apparent to those skilled in the art, and the general principles and novel features defined herein can be applied to other variations without departing from the protection scope of the present disclosure. Therefore, the present disclosure is not limited to the exemplary embodiments and designs described herein but is consistent with the broadest scope defined by the principles and novelty features disclosed herein.

**Claims**

1. A method for determining placement schemes for objects, comprising:

   identifying a set of candidate placement schemes associated with a current object to be placed in a container, wherein each candidate placement scheme includes corresponding candidate positions for placing the current object and corresponding placement postures for the current object at the candidate position; and
   selecting, based on information regarding the candidate positions in each candidate placement scheme and object density information associated with each candidate placement scheme, a final placement scheme for the current object in the container from the set of the candidate placement schemes, wherein the object density information associated with each candidate placement scheme is configured to represent the closeness of object placements in the container after placing the current object according to the candidate placement scheme.

2. The method according to claim 1, wherein selecting the final placement scheme from the set of candidate placement schemes comprises:
   utilizing a first heuristic objective and a second heuristic objective to choose the final placement scheme from the set of candidate placement schemes, wherein:

   the first heuristic objective is set to identify the candidate placement scheme with the minimum height of the candidate positions in the set of candidate placement schemes, or if the candidate positions have the same height, to identify the candidate placement scheme closest to the starting point for object placement in the container;

the second heuristic objective is set to identify the candidate placement scheme with the highest object placement density in the set of candidate placement schemes.

3. The method according to claim 2, wherein the information about the candidate positions in each candidate placement scheme includes the three-dimensional coordinates of the candidate positions in the container's coordinate system, wherein the origin of the container's coordinate system is a vertex of the bottom surface of the container and serves as the starting point, the bottom surface of the container represents the xy plane, the direction perpendicular to the bottom surface and upwards corresponds to the z-axis, the width direction of the container corresponds to the y-axis, and the length direction of the container corresponds to the x-axis;

the first heuristic objective is set to identify the candidate placement scheme with the minimum z-coordinate value of the candidate positions in the set of candidate placement schemes; if there are at least two candidate placement schemes with the same and minimum z-coordinate values, then identify the candidate placement scheme with the minimum y-coordinate value of the candidate positions; if there are at least two candidate placement schemes with the same and minimum z and y-coordinate values, then identify the candidate placement scheme with the minimum x-coordinate value of the candidate positions.

4. The method according to claim 2, wherein the object density information associated with each candidate placement scheme includes the visible surface area corresponding to the candidate placement scheme, wherein the visible surface area corresponding to each candidate placement scheme is configured to represent the total visible surface area of the objects placed in the container according to the candidate placement scheme;

the second heuristic objective is set to identify the candidate placement scheme with the smallest visible surface area in the set of candidate placement schemes.

5. The method according to claim 4, wherein the visible surface area corresponding to each candidate placement scheme is calculated as follows:

the total surface area of all objects placed in the container after placing the current object according to the candidate placement scheme is subtracted by two items: the total surface area of contacts between individual objects and the total surface area of contacts between individual objects and the container.

6. The method according to claim 2, wherein based on the first heuristic objective and the second heuristic objective, selecting the final placement scheme from the set of candidate placement schemes comprises:

determining whether there exists a target candidate placement scheme for that simultaneously satisfies the first heuristic objective and the second heuristic objective;

if a target candidate placement scheme exists, adopting the target candidate placement scheme as the final placement scheme;

if there is no target candidate placement scheme, identifying at least two candidate placement schemes as a set of available placement schemes within the set of candidate placement scheme, and selecting the final placement scheme from the set of available placement schemes.

7. The method according to claim 6, wherein determining whether there exists a target candidate placement scheme comprises:

determining whether there exists the target candidate placement scheme based on a multi-objective function constructed using a multi-objective optimization algorithm, wherein the multi-objective function comprises a first objective function corresponding to the first heuristic objective and a second objective function corresponding to the second heuristic objective.

8. The method according to claim 7, wherein the multi-objective optimization algorithm is based on the Pareto model,

determining whether there exists a target candidate placement scheme based on the multi-objective function comprises:

determining whether there exists a Pareto optimal solution based on the multi-objective function, wherein the Pareto optimal solution corresponds to the target candidate placement scheme;

if no target candidate placement scheme exists, identifying at least two candidate placement schemes from the set of candidate placement schemes as a set of available placement schemes comprises:

if no Pareto optimal solution exists, determining the Pareto front, wherein the Pareto frontier comprises a set of weakly Pareto optimal solutions, and the set of weakly Pareto optimal solutions corresponds to the set of available placement schemes.

9. The method according to claim 8, wherein selecting the final placement scheme from the set of available placement schemes comprises:

determining ideal points, wherein the ideal points comprises the minimum function values of the first objective function and the second objective function;
determining the proximity of each weakly Pareto optimal solution in the set of weakly Pareto optimal solutions to the corresponding ideal points;
identifying the target weakly Pareto optimal solution from the set of weakly Pareto optimal solutions that is closest to the ideal points, and selecting the available placement scheme corresponding to the target weakly Pareto optimal solution as the final placement scheme.

10. The method according to claim 9, wherein determining the proximity of each of the set of weakly Pareto optimal solutions to the ideal point comprises:
based on the Euclidean distance algorithm, determine the Euclidean distance between each of the set of weakly Pareto optimal solution and the ideal point.

11. The method according to claim 1, wherein each candidate position in the set of candidate placement schemes is one of the points obtained by projecting three vertices of objects already placed in the container,

wherein the three vertices comprise: a first vertex located on the top and back and left side of the object to be placed, a second vertex located on the bottom and front and left side of the object to be placed, and a third vertex located on the bottom and back and right side of the object to be placed,
in the container's coordinate system, the top and bottom surfaces are parallel to the xy-plane, the left and right surfaces are parallel to the xz-plane, and the front and back surfaces are parallel to the yz-plane,
the origin o of the coordinate system is one of the vertices on the bottom surface of the container, the bottom surface of the container is the xy-plane, and the upward direction perpendicular to the bottom surface corresponds to the z-axis,
projecting the three vertices comprises:

projecting the first vertex onto the xoz-plane or the surface of another object capable of receiving the projection of the first vertex, and projecting the first vertex onto the yoz-plane or the surface of another object capable of receiving the projection of the first vertex,
projecting the second vertex onto the xoz-plane or the surface of another object capable of receiving the projection of the second vertex, and projecting the second vertex onto the xoy-plane or the surface of another object capable of receiving the projection of the second vertex,
projecting the third vertex onto the yoz-plane or the surface of another object capable of receiving the projection of the third vertex, and projecting the third vertex onto the xoy-plane or the surface of another object capable of receiving the projection of the third vertex.

12. The method according to claim 11, wherein
the candidate position in each candidate placement scheme satisfies at least the following conditions: the candidate position has sufficient space to accommodate the current object, there is no collision between the current object and other objects at the candidate position, and the placement of the current object at the candidate position meets stability requirements.

13. An apparatus for determining placement schemes for objects, comprising:

a determination unit configured to: identifying a set of candidate placement schemes associated with a current object to be placed in a container, wherein each candidate placement scheme includes corresponding candidate positions for placing the current object and corresponding placement postures for the current object at the candidate position; and
a selection unit configured to: select a final placement scheme from the set of candidate placement schemes for placing the current object into the container, based on information about the candidate positions in each candidate placement scheme and object density information associated with each candidate placement scheme, wherein the object density information associated with each candidate placement scheme is configured to represent the density of object placements in the container after placing the current object according to the candidate placement scheme.

14. An apparatus for determining an object placement scheme, comprising:

at least one processor;
a memory in communication with the at least one processor, wherein executable code is stored thereon, and the executable code, when executed by the at least one processor, causes the at least one processor to perform the method according to any one of claims 1 to 12.

15. A computer-readable storage medium storing executable code, wherein the executable code, when executed, causes a computer to perform the method according to any one of claims 1 to 12.

FIG. 1

**200**

FIG. 2

FIG. 3A

FIG. 3B

```
┌─────────────────────┐
│         402         │
└─────────────────────┘
           │
           ▼
┌─────────────────────┐
│         404         │
└─────────────────────┘
           │
           ▼
┌─────────────────────┐
│         406         │
└─────────────────────┘
           │
           ▼
        ╱───────╲
       ╱   408   ╲
       ╲         ╱
        ╲───────╱
```

FIG. 4

FIG. 5A

FIG. 5B

FIG. 6

**700**

```
┌──────┐        ┌──────┐
│ 702  │        │ 704  │
└──┬───┘        └──┬───┘
   │               │
───┼───────────────┼────────────  710
   │               │
┌──┴───┐        ┌──┴───┐
│ 706  │        │ 708  │
└──────┘        └──────┘
```

FIG. 7